# EUROPEAN PATENT APPLICATION

(11) **EP 4 537 719 A2**
(43) Date of publication of application: **16.04.2025**
(21) Application number: 25160180.3
(22) Date of filing: 06.04.2022
(51) Int. Cl.: A47J 31/60

(54) **SYSTEM FOR CLEANING MILK DUCTS FOR A MACHINE FOR PREPARING BEVERAGES**

(30) Priority: 08.04.2021 IT 202100008759
(62) Divisional of application: 22714928.3
(71) Applicant: Luigi Lavazza S.p.A., 10152 Torino (IT)
(72) Inventor: MOLINARO, Gabriele, 10152 Torino (IT); PICONE, Gabriele Luciano, 10152 Torino (IT)
(74) Representative: Vanzini, Christian

(57) **Abstract**

A machine (M) for preparing hot beverages comprising a cleaning system, the cleaning system comprising a washing water supply piping (40) connected to a water supply system (10) of the machine, a detergent supply (42) connected to the washing water supply piping (40), a washing chamber (48) which may be supplied with washing water provided by the washing water supply piping (40), and washing valves (41, 49) arranged at one end of the washing water supply piping (40), these washing valves also being arranged between a flexible hose (51) of a milk supply of the machine and a frothing head (31) of the machine. In a first position of the valves, the washing water supply piping (40) may be fluidically connected to the washing chamber (48) for washing the movable part of the flexible hose (51) placed in the washing chamber (48). Through the flexible hose (51), the washing water contained in the washing chamber (48) may be conveyed to the milk inlet (31b) and to the distribution duct (33) of the frothing head (31).

## Description

This invention relates in general to devices for whipping milk, which devices may be used for preparing a beverage such as a cappuccino, whipped milk, and the like. As is known, these devices comprise a frothing head which is supplied via a piping connected to a milk reservoir. This piping generally comprises a flexible hose which is immersed into the interior of the milk reservoir. In some known solutions, the milk reservoir is accommodated within a refrigerator compartment associated with the machine for preparing the beverage.

Different cleaning systems are known in which the parts and ducts which have come into contact with the milk are periodically cleaned. In some known systems, makeshift trays are used which are filled with water and optionally detergent and into which the flexible hose that has been extracted from the milk reservoir is immersed. In other systems, parts that have come into contact with the milk are removed, and these parts are washed or disposed of. Generally, these solutions are disadvantageous in that, in most cleaning operations, active involvement of the user is required. This disadvantage is felt in particular for office machines; in fact, it has been found that machines which require too many cleaning operations to be carried out by the user are being increasingly abandoned. Moreover, as regards machines used in business environments, the issues of safety in the workplace and the risk of contamination between milk and detergent are of particular concern. In any case, it is desirable to automize the machine cleaning processes as much as possible, even in domestic environments.

Therefore, the object of this invention is to provide cleaning systems in which it is possible to minimize the manual operations required when cleaning the machines.

This and other objects are achieved, according to the invention, by a machine for preparing beverages, wherein said machine includes
a water supply configured to supply liquid water or steam within the machine,
a frothing head for whipping milk, said frothing head comprising a milk inlet and a distribution duct for distributing a beverage, which distribution duct is arranged downstream of the milk inlet,
a milk supply piping having an inlet end which may be connected to a milk reservoir and an outlet end which is connected to the milk inlet of the frothing head, said milk supply piping comprising, at the inlet end, a flexible hose having a fixed end and a movable part configured to be immersed into the milk reservoir, and
a cleaning system including:
   - a washing water supply piping having an inlet end connected to the water supply and an outlet end,
   - a washing chamber which may be supplied with washing water provided by the washing water supply piping, it being possible to place the movable part of the flexible hose that has been extracted from the milk reservoir in said washing chamber, and
   - washing valve means arranged at the outlet end of the washing water supply piping, said washing valve means also being arranged between the flexible hose and the frothing head, and being switchable between a first position in which the flexible hose is isolated from the milk inlet of the frothing head, and a second position in which the flexible hose is in fluid communication with the milk inlet of the frothing head,
wherein, in the first position, the washing water supply piping may also be fluidically connected to the washing chamber by means of said washing valve means, for washing the movable part of the flexible hose placed in the washing chamber,
wherein, through the flexible hose, the washing water contained in the washing chamber may be conveyed to the milk inlet and to the distribution duct of the frothing head,
wherein said cleaning system further comprises a detergent supply connected to the washing water supply piping.

By using a machine according to the invention, it is possible to minimize the manual operations required to clean the milk ducts. It is also possible to configure the system such that it may operate according to different cleaning processes, for example a completely automatic process (which may be activated more frequently) for cleaning the frothing head and the part of the milk line external to the refrigerator compartment, and a semi-automatic process (which may be activated less frequently) for cleaning the entire milk line starting from the flexible hose.

Further features and advantages of the invention will become clear from the detailed description that follows, given purely by way of non-limiting example and with reference to the accompanying drawings, in which:
Fig. 1 is an electro/fluidic diagram of a machine for preparing beverages, comprising a cleaning system according to the invention,
Fig. 2 to 7 show a semi-automatic process for cleaning the milk ducts of the machine in Fig. 1,
Fig. 8 to 10 show an automatic process for cleaning the milk ducts of the machine in Fig. 1,
Fig. 11 is a simplified view showing a refrigerator compartment according to an embodiment of the invention,
Fig. 12 is a simplified view showing a refrigerator compartment according to another embodiment of the invention, in a first operating position,
Fig. 13 is a perspective view of a component of the refrigerator compartment in Fig. 12,
Fig. 14 and 15 are simplified front and side views of the refrigerator compartment in Fig. 12, in a second operating position,
Fig. 16a and 16b are electro/fluidic diagrams of a machine for preparing beverages, comprising a cleaning system according to a variant of the invention,
Fig. 16c is an electro/fluidic diagram of a cleaning system according to a further variant,
Fig. 17 and 18 are simplified views showing a refrigerator compartment of the machine in Fig. 16a-c, in a first and in a second operating position, respectively,
Fig. 19 is a view of a component of the refrigerator compartment in Fig. 17 and 18, and
Fig. 20 is a sectional view of a component of a cleaning system according to a further variant of the invention.

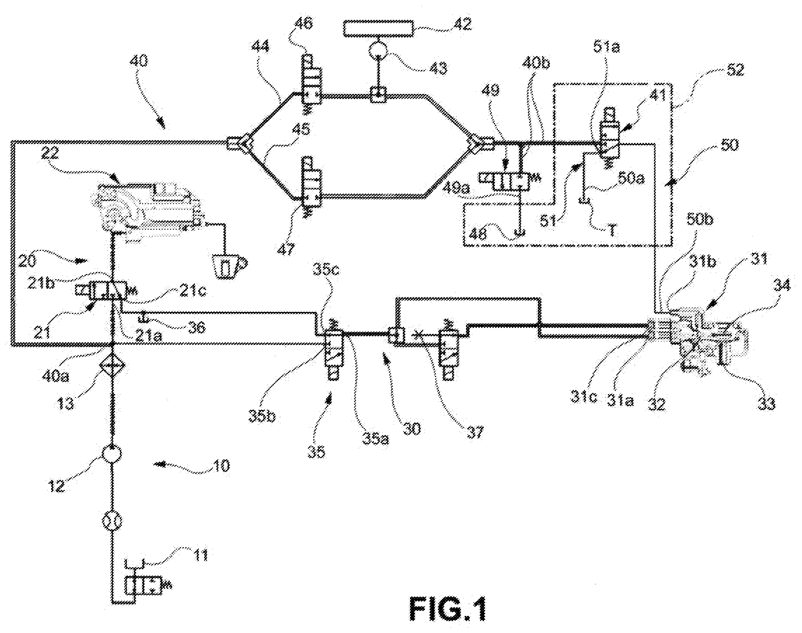

Fig. 1 shows, as a whole, a machine for preparing beverages, in particular coffee, cappuccino and the like. In general, this invention covers both domestic machines and machines used in business or public environments, as well as vending machines.

This machine comprises a water supply 10 configured to supply liquid water or steam within the machine. In the example shown, inside the machine, the water supply comprises a water supply system 10 of the kind known per se. The water supply system 10 typically comprises a reservoir 11, an electric pump 12 which draws the water from the reservoir 11, and a heating device 13 supplied with the water provided by the pump 12. The heating device 13 is a so-called instantaneous heating device, otherwise known as a flow heater or transit heater, and is used to generate the steam or hot water flow necessary for the system to operate. In general, other means for generating steam that are of a type known to a person skilled in the art may be provided. According to an embodiment which is not shown, the machine may not have a proper water supply system. In this case, the water supply may comprise a fitting or connector for directly connecting to the mains water.

A brewing line 20, a frothing line 30 and a washing water supply line or piping 40 branch off downstream of the heating device 13. The brewing line 20 comprises a brewing valve 21 having an inlet 21a connected to the heating device 13 and an outlet 21b connected to a brewing unit 22 of a kind known per se, in such a way that a flow of steam is supplied to this unit 22 for the preparation of a brewed beverage, for example a coffee-based beverage. The brewing valve 21 may be switched between a first position in which the brewing unit 22 is in fluid communication with the heating device 13, and a second position in which the brewing unit 22 is isolated from the heating device 10. The brewing valve 21 may also comprise an outlet 21c which is connected to a water discharge receptacle and which, in the second position, is connected to the outlet 21b to allow water to be discharged from the brewing unit 21.

The frothing line 30 comprises a frothing head 31 of a kind known per se. The frothing head 31 comprises a steam-driven jet pump 32 and a distribution duct 33 for distributing a beverage, which distribution duct is arranged downstream of the jet pump 32. The frothing head 31 comprises a steam inlet 31a through which the steam produced by the heating device 13 may be injected into the jet pump 32 in order to generate a steam jet. A frothing chamber 34 of the kind known per se, into which the steam/milk/air mixture is conveyed in order to create an emulsion, and a subsequent dispensing duct may be arranged downstream of the jet pump 31 and upstream of the distribution duct 33.

The frothing line 30 also comprises a steam valve 35 comprising an outlet 35a connected to the steam inlet 31a of the frothing head 31, and an inlet 35b connected to the outlet of the heating device 13. The steam valve 35 may be switched between a first position in which the frothing head 31 is in fluid communication with the heating device 13, and a second position in which the frothing head 31 is isolated from the heating device 13. The brewing valve 35 may also comprise an outlet 35c which is connected to a water discharge receptacle 36 and which, in the second position, is connected to the outlet 35a to allow water to be discharged from the frothing line 31.

Moreover, the frothing head 31 comprises a milk inlet 31b and an air inlet 31c through which the respective fluids may be drawn by the steam jet within the jet pump 32 in order to be mixed with the steam jet. The milk inlet 31b is connected to a milk reservoir T, in the manner described in the following. For the purposes of this invention, the term "milk" comprises milk and derivatives of animal and plant origin (soya, rice, oat, almond, hazelnut, nuts, etc.) and preparations based on milk together with other ingredients (cocoa/chocolate, fruit).

The frothing line 30 may also comprise further valves and fluidic components arranged between the steam valve 35 and the frothing head 31. These further valves and fluidic components do not form the subject of this invention and will therefore not be described further. It should be noted here that the frothing line 30 comprises an air supply 37 which may be put in fluid communication with the air inlet 31c of the frothing head 31 in order to suck air into the jet pump 32.

The milk inlet 31b of the frothing head 31 is connected to the milk reservoir T via a milk supply line or piping 50. The milk supply piping 50 has an inlet end 50a which may be connected to the milk reservoir T and an outlet end 50b which is connected to the milk inlet 31b of the frothing head 31. At the inlet end 50a, the milk supply piping 50 typically comprises a flexible hose 51 which has a fixed end 51a and a movable part configured to be immersed into the milk reservoir T. In the example shown, the machine for preparing beverages comprises a refrigerator compartment 52 which, in Fig. 1, is shown by an area surrounded by a dash-dot line. Therefore, in the example shown, the milk reservoir T and the flexible hose 51 are contained in the refrigerator compartment 52.

The machine for preparing beverages also comprises a cleaning system which may be actuated to clean the milk supply piping 50 and the frothing head 31.

This cleaning system includes the washing water supply line or piping 40. The washing water supply piping 40 has an inlet end 40a connected to the water supply system 10, more specifically to the outlet of the heating device 13, and an outlet end 40b.

The cleaning system also comprises a detergent supply 42 connected to the washing water supply piping 40. **In** the example shown, a pump 43, for example a peristaltic pump, is associated with the detergent supply 42, which pump is configured to draw the detergent from the detergent supply 42 and introduce it into the washing water supply piping 40. This configuration is not essential to the purposes of the invention, and other means for dosing the detergent, for example a dosing valve system, may be provided instead of the pump. According to further embodiments, the detergent may be provided without using a pump or valve means, for example by falling or gravity. According to other embodiments, the detergent may be provided in a solid form (tablets) by means of a specific dispenser.

In the example shown, the washing water supply piping 40 comprises a cleaning branch 44 and a rinse branch 45 arranged in parallel. The cleaning branch 44 is connected to the detergent supply 42. A shut-off valve is associated with each of these branches, which valves are denoted by 46 and 47, respectively, in order to selectively fluidically connect or disconnect the relevant branch to/from the water supply system 10. This dual-line configuration has the advantage of providing additional guarantees in terms of reducing the risk of milk contamination as a result of the washing processes described in the following. Nevertheless, it is possible to design a configuration in which the washing water supply piping 40 comprises a single branch configured as the cleaning branch 44 or, in the event that the machine does not have a detergent supply, as the rinse branch 45. In the event that the machine does not have a detergent supply, the detergent may be introduced directly into the washing chamber 48 manually by the user, in liquid or solid (tablet) form.

The cleaning system also comprises a washing chamber 48 which may be supplied with washing water provided by the washing water supply piping 40. As will be described in the following, the movable part of the flexible hose 51 that has been extracted from the milk reservoir T may be placed in the washing chamber 48. In the example shown in Fig. 1, the washing chamber 48 is also positioned within the refrigerator compartment 52. One or more level sensors may be associated with the washing chamber 48, which level sensors are configured to detect the level of liquid within the washing chamber 48 and provide a corresponding signal. These sensors are of a kind known per se, for example optical or capacitive sensors.

The cleaning system also comprises washing valve means arranged at the outlet end 40b of the washing water supply piping 40. These washing valve means are also arranged between the flexible hose 51 and the frothing head 31, and may be switched between a first position in which the flexible hose 51 is isolated from the milk inlet 31b of the frothing head 31, and a second position in which the flexible hose 51 is in fluid communication with the milk inlet 31b of the frothing head 31. In the first position of the washing valve means, the washing water supply piping may also be fluidically connected to the washing chamber 48 by means of the washing valve means, for washing the movable part of the flexible hose 51 placed in the washing chamber 48. Through the flexible hose 51, the washing water contained in the washing chamber 48 may be conveyed to the milk inlet 31b and thus, by means of the jet pump 32, to the distribution duct 33 of the frothing head 31.

In the example shown, the aforementioned valve means comprise a first washing valve 41 which connects the outlet end 40b of the washing water supply piping 40 and the flexible hose 51 to the milk inlet 31b of the frothing head 31, and a second washing valve 49 which connects the outlet end 40b of the washing water piping 40 to the washing chamber 48. The first washing valve 41 may be switched between a first position in which the flexible hose 51 is isolated from the milk inlet 31b of the frothing head 31 and the outlet end 40b of the washing water piping 40 is in fluid communication with the milk inlet 31b of the frothing head 31, and a second position in which the flexible hose 51 is in fluid communication with the milk inlet 31b of the frothing head 31 and the outlet end 40b of the washing water piping 40 is isolated from the milk inlet 31b of the frothing head 31. The second washing valve 49 may be switched between a first position in which the washing chamber 48 is in fluid communication with the outlet end 40b of the washing water piping 40, and a second position in which the washing chamber 48 is isolated from the outlet end 40b of the washing water piping 40.

In the example shown, the first washing valve 41 is also arranged within the refrigerator compartment. The fixed end 51a of the flexible hose 51 is connected to the first washing valve 41. When the machine for preparing beverages is in the working condition, the movable part of the flexible hose 51 is immersed into the milk reservoir T while the first washing valve 41 is in its second position, and therefore allows the frothing head 31 to suck the milk from the reservoir T, through the flexible hose 51 and the milk supply piping 50, as a result of the action of the jet pump 32.

The device described above also comprises an electronic control unit operatively connected to the various devices of the machine for preparing beverages. The electronic control unit is configured to control and coordinate the aforesaid components in a predetermined manner according to instruction signals provided to the control unit.

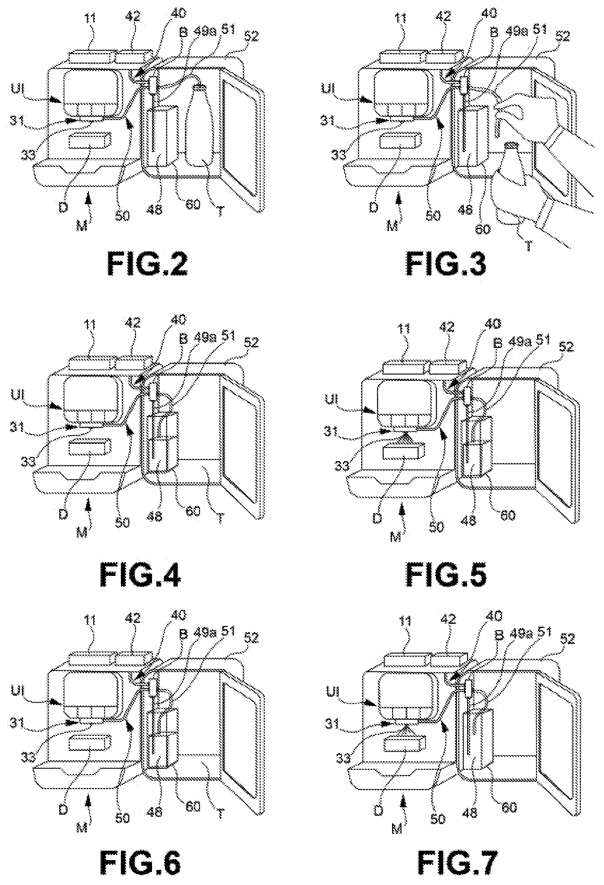

With reference to Fig. 2 to 7, a semi-automatic cleaning process will now be described which allows all of the ducts and components that have come into contact with the milk to be cleaned.

In Fig. 2 to 7, the machine for preparing beverages is denoted by reference sign M, while UI is used to denote a user interface (for example a keypad or other control panel) which may be operated by a user in order to activate the various functions of the machine. The washing valve means (first washing valve 41 and second washing valve 49) are incorporated in a valve block B which acts as an interface between the ducts arranged within the refrigerator compartment 52 and the ducts mounted on the machine M (according to an alternative embodiment, the second washing valve 49 may be inside the machine M and not in the interface zone). In particular, the valve block B acts as an interface between the flexible hose 51, which is arranged within the refrigerator compartment 52, and the rest of the milk supply piping 50, which is arranged outside the refrigerator compartment 52. Moreover, reference sign 49a denotes an outlet of the second washing valve 49, which outlet, in the example shown, is in the form of a hose that is immersed into the washing chamber 48 that is formed inside a tray or pocket 60 that is open at the top. The detergent supply reservoir 42 and the water reservoir 11 are also shown. The connections between the reservoirs 11 and 42 and the washing water supply piping 40 are not shown for the sake of simplicity.

Fig. 2 shows the machine M in an initial position of the washing process.

In Fig. 3, a user removes the milk reservoir T from the refrigerator compartment 52 and extracts the movable part of the flexible hose 51 from this reservoir, finally placing said movable part in the washing chamber 48. It is noted that, since the washing chamber 48 is integrated in the refrigerator compartment 52, there is no need to insert a specific tray inside the refrigerator compartment 52.

By acting on the user interface UI, the user starts the automatic part of the cleaning process (according to one embodiment, the electronic control unit of the machine may automatically start the washing cycle on the basis of a signal provided by sensors which detect the flexible hose 51 passing from the milk reservoir T to the washing chamber 48). The electronic control unit of the machine then actuates the distribution of water comprising detergent to the washing chamber 48; the water is delivered by the pump 12 of the water supply system 10 and mixes with the detergent in the washing water supply piping 40. The washing water is then introduced into the washing chamber 48 through the valve block B, which is in a position that puts the outlet 49a of the valve means 41, 49 in fluid communication with the washing water supply piping 40. The fluid communication with the flexible hose 51 and with the frothing head 31 is blocked (Fig. 4).

The electronic control unit then switches the valve means 41, 49 so as to establish the fluid communication between the flexible hose 51 and the frothing head 31, and block the fluid communication between the washing water supply piping 40 and the washing chamber 48. The electronic control unit also activates the frothing line so that steam is delivered to the frothing head 31 through the steam inlet 31a thereof. The jet pump 32 of the frothing head 31 then sucks up the washing water comprising detergent present in the washing chamber 48, through the flexible hose 51 and the rest of the milk supply piping 50. The steam comprising the washing water and the detergent are then discharged to the outside through the distribution duct 33 (Fig. 5). In the example shown, the machine M comprises a collection drawer D arranged below the frothing head 31 in order to catch the discharge from the frothing head 31. This collection drawer D may be manually pulled out from the body of the machine M, or may have an automatic advancing/retracting movement that is also actuated by the electronic control unit of the machine M. The washing cycle described above may be carried out more than once in order to increase the effectiveness thereof.

Fig. 6 and 7 show duct rinsing phases which are analogous to the phases described above with reference to Fig. 4 and 5 except for the fact that the washing water supply piping 40 is now configured to supply water without detergent. In the event that the washing water supply piping 40 has a cleaning branch 44 and a rinse branch 45, as shown in Fig. 1, this involves enabling the rinse branch 45 and disabling the cleaning branch 44 via the respective valves 46 and 47. If the washing water supply piping has just one branch, the electronic control unit may simply block the detergent supply to the washing water supply piping 40. The rinsing cycle described above may be carried out more than once in order to increase the effectiveness thereof.

In the embodiment described above, in the event that the flexible hose 51 is not positioned so as to reach the bottom of the washing chamber 48, it is possible for a residual part of the liquid in the washing chamber 48 to not be sucked up and thus be left, undesirably, in this chamber. In order to overcome this problem, according to one embodiment, the outlet 49a of the washing water supply piping 40 is positioned at the bottom of the washing chamber 48. The residual liquid may therefore be sucked up by a pump provided in the washing supply piping, for example the detergent pump 43 if said pump is configured in such a way that it may be operated to reverse the direction of the flow of liquid in the washing water supply piping 40.

In terms of monitoring the rinse phase, a detergent presence sensor may be provided to detect the residual presence of detergent in the rinse water. This sensor may be a turbidity sensor, for example a conductive sensor, and may be positioned in the washing chamber 48 at the end 40b of the washing water supply piping 40, or in the milk supply piping 50. On the basis of a signal provided by the detergent presence sensor, the control unit of the machine may be configured to control the number of rinse cycles required to completely remove the detergent from the ducts through which the milk is intended to pass. According to a further embodiment, a detergent presence sensor may be integrated on the pump 43 for the detergent.

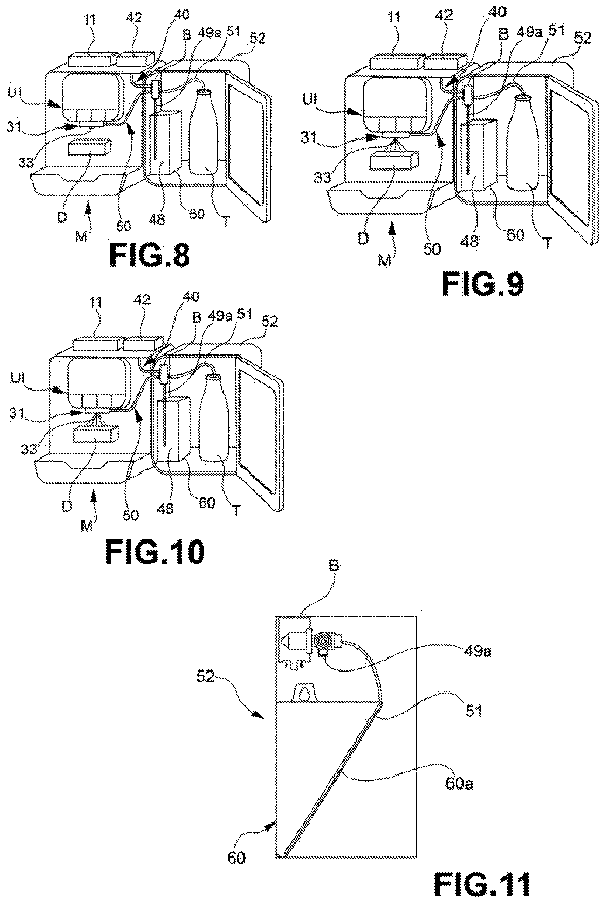

With reference to Fig. 8 to 10, an automatic cleaning process will now be described which allows just the ducts and components outside the refrigerator compartment 52 that have come into contact with the milk to be cleaned. It may be that this cleaning process has to be carried out at a greater frequency than the process described with reference to Fig. 2 to 7, since the process of the milk residues perishing is quicker in the ducts and components outside the refrigerator compartment 52. The process of cleaning just the external components and ducts is advantageously completely automatic and therefore does not require manual intervention from the user.

Fig. 8 shows the machine M in an initial position of the washing process, which is a position identical to that in Fig. 2.

By acting on the user interface UI, the user starts the cleaning process (according to one embodiment, it may be possible to set the electronic control unit of the machine to start the washing phase autonomously, for example during nighttime hours). The electronic control unit of the machine then actuates the distribution of water comprising detergent to the valve means 41, 49 (valve block B); the water is delivered by the pump 12 of the water supply system 10 and mixes with the detergent in the washing water supply piping 40. The valve block B is in a position that puts the washing water supply piping 40 in fluid communication with the external part of the milk supply piping 50 and the frothing head 31. The fluid communication with the flexible hose 51 and with the washing chamber 48 is blocked (Fig. 9). The washing water comprising detergent then reaches the frothing head 31 through the milk supply piping 50. The washing water and the detergent are then discharged into the collection drawer D through the distribution duct 33.

Fig. 10 shows a duct rinsing phase which is analogous to the phase described above with reference to Fig. 9 except for the fact that the washing water supply piping 40 is now configured to supply water without detergent.

Fig. 11 shows a possible embodiment of the pocket 60 inside which the washing chamber 48 is formed. The pocket 60 shown has an inclined wall 60a configured to provide support for the movable part of the flexible hose 51, so as to have as large a portion of the flexible hose 51 as possible immersed in the washing chamber 48 of the pocket 60. The pocket 60 may be differently shaped to that described.

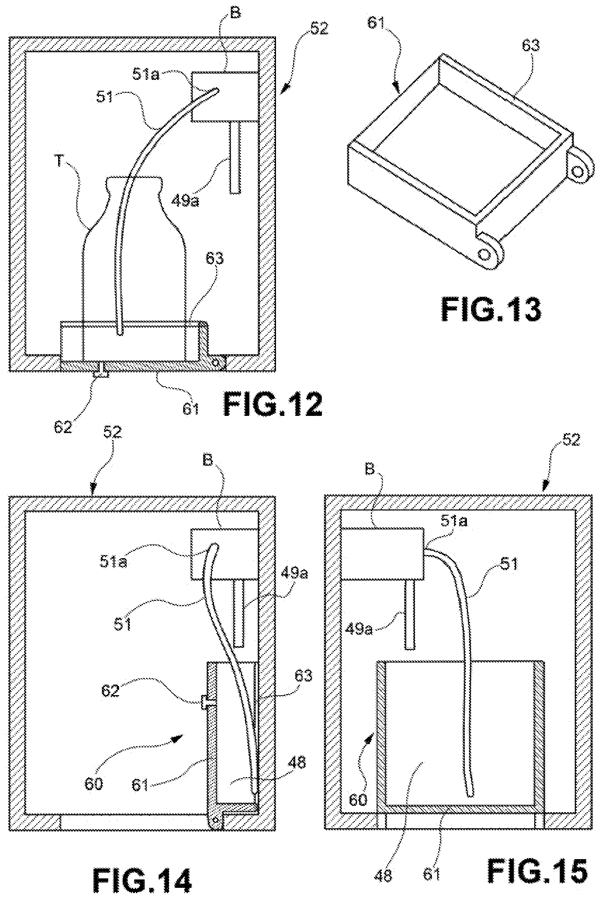

Fig. 12 to 15 show a further possible embodiment of the pocket 60, designed to reduce the possibility of the user using it incorrectly.

According to this embodiment, the pocket comprises a movable wall or plate 61 which is mounted within the refrigerator compartment 52 and shown specifically in Fig. 13. The movable wall or plate 61 may be rotated between a lowered or horizontal position (shown in Fig. 12) in which it is configured to provide support for the milk reservoir T, and a raised or upright position (shown in Fig. 14 and 15) in which, in cooperation with walls of the refrigerator compartment 52, it is configured to form the pocket 60. In the example shown, the movable wall or plate 61 is hinged to the bottom of the refrigerator compartment 52. A presence sensor 62, for example a microswitch, is associated with this movable wall or plate 61, which sensor is configured to detect that the upright position has been reached and provide a corresponding signal. This signal may be used by the electronic control unit of the machine to establish the supply of water to the pocket 60.

The movable wall or plate 61 may be brought into the upright position when the milk reservoir T is removed therefrom. In order to ensure, when the movable wall or plate 61 is in the upright position, that the pocket 60 is sealed, a seal 63 is provided along the edge of the movable wall or plate 61 that is intended to come into contact with a wall of the refrigerator compartment 52. Affixing means (not shown) are also provided to ensure that the seal 63 is held sufficiently tightly against the wall of the refrigerator compartment 52.

The movable wall or plate 61, during the movement from the horizontal position to the upright position, is advantageously capable of dragging the movable part of the flexible hose 51 that has been removed from the milk reservoir T. This is possible if the flexible hose 51 removed from the reservoir T is positioned so as to intercept the trajectory of movement of the movable wall or plate 61 from the lowered position to the raised position. Therefore, when the movable wall or plate 61 reaches the upright position, it closes the movable part of the flexible hose 51 within the washing tank 48 formed inside the pocket 60 that has been formed by the movable wall or plate 61 in cooperation with the corresponding wall of the refrigerator compartment 52.

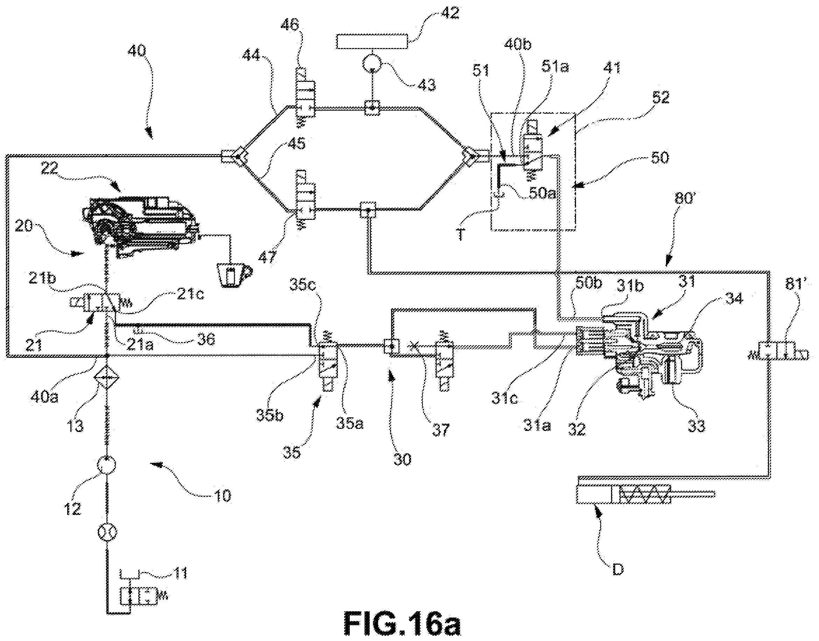

Fig. 16a-c show, as a whole, another machine for preparing beverages, in particular coffee, cappuccino and the like. On the whole, this machine is substantially identical to that shown in Fig. 1, but differs therefrom essentially on account of the architecture of the part of the cleaning system within the refrigerator compartment 52. In order to describe the other parts of the machine, reference is made to the preceding description.

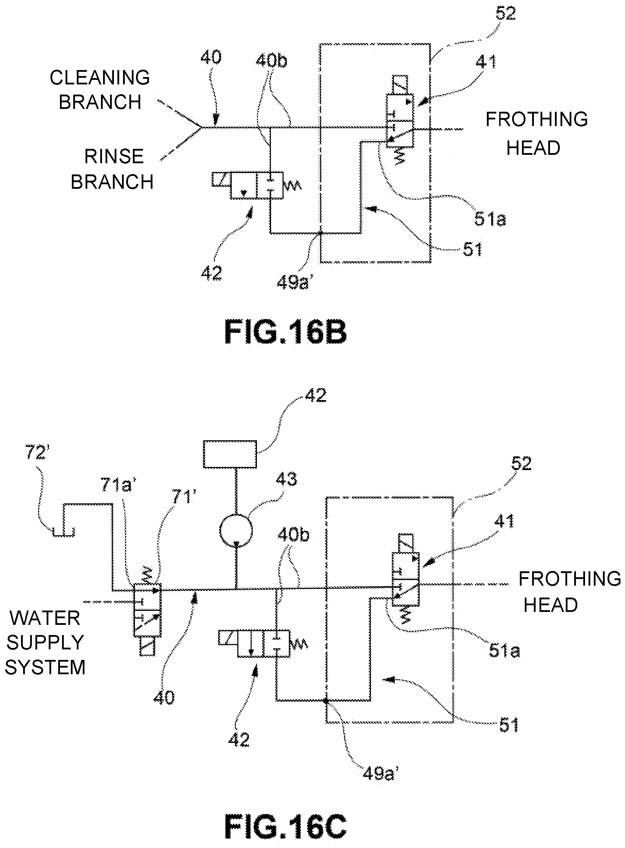

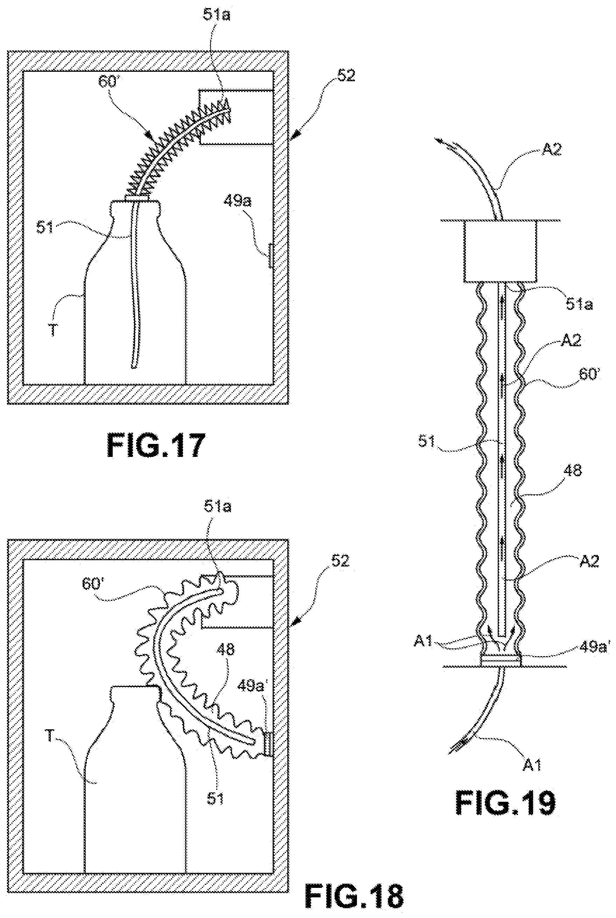

According to the variants shown in Fig. 16a-c, the pocket or tray 60 is not provided. However, as may be seen in Fig. 17-19, the washing chamber 48 is formed within a tubular bellows 60' which is arranged around the flexible hose 51 and has an end fixedly connected to the fixed end 51a of the flexible hose 51. The bellows 60' may be moved between a retracted position (shown in Fig. 16a and 17) in which the movable part of the flexible hose 51 protrudes from the bellows 60' and may be inserted into the milk reservoir T, and an extended position (shown in Fig. 16b and 18-19) in which the movable part of the flexible hose 51 is entirely contained within the bellows 60', and a free end of the bellows 60' may be coupled to the second washing valve 49 of the washing valve means. For convenience, the second washing valve 49 is not shown in Fig. 16a, and the bellows 60' is not shown in Fig. 16a-b.

The semi-automatic washing process that may be carried out by this machine is similar to that described with reference to Fig. 2-7. When the flexible hose 51 is inserted into the milk reservoir T, the bellows 60' is held in its retracted position due to the fact that the free end of the bellows 60' rests against a mouth of the milk reservoir T. Alternatively, it is possible to provide other means for jamming the bellows 60' in its retracted position. When the user removes the milk reservoir T from the refrigerator compartment 52 and extracts the flexible hose 51 from this reservoir, the user may then extend the bellows 60' beyond the free end of the flexible hose 51 and fix the free end of the bellows 60' to an outlet 49a' of the second washing valve 49, which outlet is provided with a connector (not shown). As may be seen in Fig. 18 and especially in Fig. 19, the free end of the flexible hose 51 is not directly connected to the outlet 49a' of the second washing valve 49, but is still in fluid communication with the washing chamber 48 due to the fact that it is located within the bellows 60'.

Otherwise, the semi-automatic washing process and the automatic washing process that may be carried out by the machine in Fig. 16a-b are substantially identical to those of the machine in Fig. 1, with the difference that the washing chamber 48 is formed within the bellows 60', rather than within the tray or pocket 60. The arrows A1 in Fig. 19 show the phases in which the washing water, with or without detergent, is introduced into the washing chamber 48 (in a manner analogous to the phases shown in Fig. 4 and 6). The arrows A2 in Fig. 19 show the phases in which the washing water, with or without detergent, is drawn from the washing chamber 48 and conveyed to the frothing head 31 (in a manner analogous to the phases shown in Fig. 5 and 7).

Fig. 16c shows a variant of the cleaning system of the machine in Fig. 16a-b. For convenience, this variant is shown only in the connection configuration of Fig. 16a; nevertheless, it is understood that this variant is also capable of assuming the two different positions shown in Fig. 17 and 18.

In the variant in Fig. 16c, the washing water supply piping 40 comprises a single branch, as an alternative to the double supply branch, analogously to that described above for the machine in Fig. 1.

Moreover, in the variant in Fig. 16c, the washing water supply piping comprises a switchover valve 71' which has an outlet 71a' connected to a drain 72'. The switchover valve 71' may be switched between a first position in which the switchover valve 71' puts the washing water supply piping 40 in fluid communication with the water supply system 10 and isolates the washing water supply piping 40 from the drain 72', and a second position in which the switchover valve 71' puts the washing water supply piping 40 in fluid communication with the drain 72' and isolates the washing water supply piping 40 from the water supply system 10. The arrangement described above makes it possible to draw any residual liquid from the washing chamber 48 at the end of the semi-automatic cleaning cycle. For this purpose, the detergent pump 43 may be configured in such a way that it may be operated to reverse the direction of the flow of liquid in the washing water supply piping 40. Naturally, this arrangement may also be provided in the machine shown in Fig. 1.

With reference to Fig. 16a, a variant of the discharge system described above is shown. In this variant, a discharge line 80' is connected to the rinse branch 45 of the washing water supply piping 40. This discharge line 80' flows into a drain which consists of the same extractable drawer D shown in the machine in Fig. 2-7 and 8-10, and has a shut-off valve 81' for selectively fluidically connecting or disconnecting the drawer D to/from the rinse branch 45. Naturally, this arrangement may also be provided in the machine shown in Fig. 1.

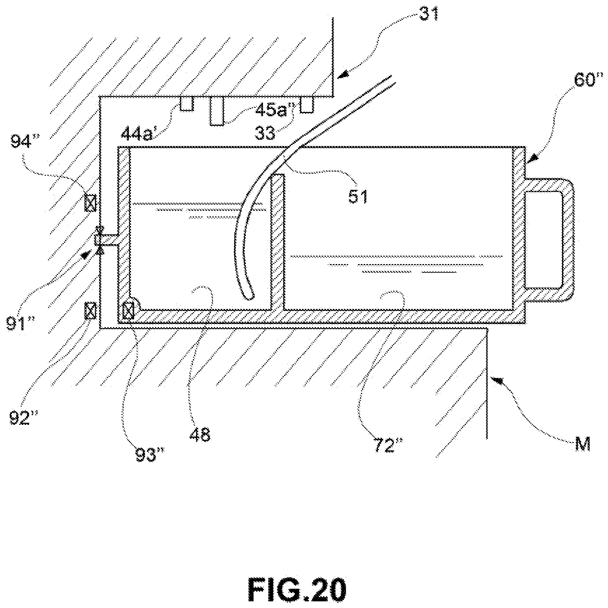

Fig. 20 shows a further embodiment of the invention. In this embodiment, a machine for preparing beverages is provided which is substantially similar to that described with reference to Fig. 1, but which does not have a refrigerator compartment. For descriptive purposes, it is therefore possible to imagine that the electro/fluidic diagram of this machine is identical to that in Fig. 1, with the line representing the refrigerator compartment 52 removed.

In said machine, the flexible hose 51 is immersed into a milk reservoir T that is being used at the time, and this reservoir is returned to a refrigerator after use. In a machine of this kind, the washing chamber 48 is formed in a tray 60" which may be coupled in a releasable manner to the body of the machine M, under the frothing head 31. A collection chamber 72" is also formed in this tray 60'', which collection chamber is separate from the washing chamber 48 and configured to be arranged under the distribution duct 33 of the frothing head 31. In Fig. 20, the flexible hose 51 is shown only in part, and for convenience the first washing valve 41 to which this hose is connected is not shown. This washing valve 41 is mounted on the machine M.

In order to fix the tray 60" to the body of the machine M, a mechanical affixing system, for example a clip-on system, may be provided, which system is denoted by 91'' in Fig. 20. A presence sensor 92'' may also be provided, which presence sensor is configured to detect the presence or absence of the tray 60'' and provide a corresponding signal. In the example shown, the presence sensor 92" is designed as a magnetic sensor, in particular a reed sensor, which is configured to detect a magnet 93'' mounted on the tray 60''. A level sensor 94'', for example an optical or capacitive sensor, may also be provided, which level sensor is configured to detect the level of liquid within the collection chamber 48 and provide a corresponding signal. Fig. 20 also shows a cleaning outlet 44a" and a rinse outlet 45a" which are understood to be connected, respectively, to a cleaning branch and a rinse branch of a washing water supply piping analogous to that in the diagram shown in Fig. 1.

The semi-automatic washing process that may be carried out by this machine is similar to that described with reference to Fig. 2-7. Before starting the cleaning operation, the user fixes the tray 60" to the body of the machine M. The flexible hose 51 is then extracted from the milk reservoir T (if it has not already been extracted) and the movable part thereof is inserted into the collection chamber 48 of the tray 60".

Otherwise, the semi-automatic washing process and the automatic washing process that may be carried out by the machine in Fig. 20 are substantially identical to those of the machine in Fig. 1, with the difference that the washing chamber 48 is formed within the releasable tray 60'', rather than within the tray or pocket 60 formed within the refrigerator compartment 52. The collection chamber 72'' of the tray 60" performs the function of the drawer D described in the preceding embodiments.

Naturally, without prejudice to the principle of the invention, the embodiments and the details of construction may vary widely with respect to that which has been described and illustrated purely by way of non-limiting example, without thereby departing from the scope of protection of the invention as defined in the appended claims.

## Claims

1. A machine (M) for preparing beverages, wherein said machine includes
a water supply (10) configured to supply liquid water or steam within the machine,
a frothing head (31) for heating and whipping milk, said frothing head comprising a milk inlet (31b) and a distribution duct (33) for distributing a hot beverage, which distribution duct is arranged downstream of the milk inlet (31b),
a milk supply piping (50) having an inlet end (50a) connectable to a milk reservoir (T) and an outlet end (50b) connected to the milk inlet (31b) of the frothing head (33), said milk supply piping comprising, at the inlet end (50a), a flexible hose (51) having a fixed end (51a) and a movable part configured to be immersed into the milk reservoir (T), and
a cleaning system including:
- a washing water supply piping (40) having an inlet end (40a) connected to the water supply (10) and an outlet end (40b),
- a washing chamber (48) suppliable with washing water provided by the washing water supply piping (40), in said washing chamber there being placeable the movable part of the flexible hose (51) that has been extracted from the milk reservoir (T) in said washing chamber, and
- washing valve means (41, 49) arranged at the outlet end (40b) of the washing water supply piping (40), said washing valve means also being arranged between the flexible hose (51) and the frothing head (31), and being switchable between a first position in which the flexible hose (51) is isolated from the milk inlet (31b) of the frothing head (31), and a second position in which the flexible hose (51) is in fluid communication with the milk inlet (31b) of the frothing head (31),
wherein, in the first position, the washing water supply piping (40) is further fluidically connectable to the washing chamber (48) by means of said washing valve means (41, 49), for washing the movable part of the flexible hose (51) placed in the washing chamber (48),
wherein, through the flexible hose (51), the washing water contained in the washing chamber (48) is conveyable to the milk inlet (31b) and to the distribution duct (33) of the frothing head (31), and
wherein said cleaning system further comprises a detergent supply (42) connected to the washing water supply piping (40).

2. The machine of claim 1, wherein the frothing head (31) further comprises a steam-driven jet pump (32), said jet pump being connected upstream to the milk inlet (31b) and downstream to the distribution duct (33).

3. The machine of claim 1 or 2, wherein, with the washing valve means (41, 49) in the first position, the washing water is conveyable into the washing chamber (48) via the washing water supply piping (40) and, with the washing valve means (41, 49) in the second position, the washing water contained in the washing chamber (48) is conveyable to the milk inlet (31b) and to the distribution duct (33) of the frothing head (31).

4. The machine of claim 3, wherein said washing valve means comprise a first washing valve (41) connecting the outlet end (40b) of the washing water supply piping (40) and the flexible hose (51) to the milk inlet (31b) of the frothing head (31), and a second washing valve (42) connecting the outlet end (40b) of the washing water supply piping (40) to the washing chamber (48), wherein said first washing valve is switchable between a first position in which the flexible hose (51) is isolated from the milk inlet (31b) of the frothing head (31) and the outlet end (40b) of the washing water piping (40) is in fluid communication with the milk inlet (31b) of the frothing head (31), and a second position in which the flexible hose (51) is in fluid communication with the milk inlet (31b) of the frothing head (31) and the outlet end (40b) of the washing water supply piping (40) is isolated from the milk inlet (31b) of the frothing head (31), and wherein said second washing valve is switchable between a first position in which the washing chamber (48) is in fluid communication with the outlet end (40b) of the washing water supply piping (40), and a second position in which the washing chamber (48) is isolated from the outlet end (40b) of the washing water supply piping (40).

5. The machine of any of the preceding claims, wherein the machine (M) further comprises a refrigerator compartment (52) within which the washing chamber (48), the milk reservoir (T) and, at least in part, said washing valve means are arranged.

6. The machine of claim 5, wherein the washing chamber (48) is formed within a pocket (60; 60') arranged within the refrigerator compartment (52).

7. The machine of claim 6, wherein said pocket comprises a movable wall (61) mounted within the refrigerator compartment (52), said movable wall being rotatable between a horizontal position in which the movable wall is configured to provide support for the milk reservoir (T), and an upright position in which, in cooperation with walls of the refrigerator compartment (52), the movable wall is configured to form the pocket (60).

8. The machine of claim 7, wherein said movable wall, during a movement from the horizontal position to the upright position, is capable of dragging the movable part of the flexible hose (51).

9. The machine of claim 5, wherein the washing chamber (48) is formed within a tubular bellows (60') which is arranged around the flexible hose (51) and has an end fixedly connected to the fixed end (51a) of the flexible hose (51), said bellows being movable between a retracted position in which the movable part of the flexible hose (51) protrudes from the bellows (60') and is insertable into the milk reservoir (T), and an extended position in which the movable part of the flexible hose (51) is entirely contained within the bellows (60'), and a free end of the bellows (60') is couplable to said valve means.

10. The machine of claim 3 or 4, wherein the washing chamber (48) is formed in a tray (60") couplable in a releasable manner to the body of the machine (M) under the frothing head (31), a collection chamber (72") also being formed in said tray, which collection chamber is separate from the washing chamber (48) and configured to be arranged under the distribution duct (33) of the frothing head (31).

11. The machine of any of the preceding claims, wherein the washing water supply piping (40) comprises
a cleaning branch (44) and a rinse branch (45) arranged in parallel, the cleaning branch (44) being connected to the detergent supply (42), and
switching valve means (46, 47) configured to selectively put the cleaning branch (44) or the washing branch (45) in fluid communication with the water supply (10).

12. The machine of any of claims 6 to 8, wherein the washing water supply piping (40) comprises an outlet (49a) arranged at a bottom of the washing chamber (48).

13. The machine of any of claims 1 to 11, further comprising a detergent presence sensor configured to detect the presence of detergent in the water and provide an indicative signal, a control unit being configured to control a rinse operation of the machine (M) on the basis of said signal.

14. A method for operating a machine of any of the preceding claims, comprising the following steps:
supplying washing water to said washing valve means (41, 49),
switching the washing valve means (41, 49) in such a way to route said washing water selectively to the washing chamber (48) to collect a given amount of washing water in the washing chamber (48), or to the frothing head (31) to expel the washing water through the distribution duct (33).

15. The method of claim 14, further comprising the step of
sucking the amount of water collected in the washing chamber (48) into the foaming head (31), and
expelling the washing water through the distribution duct (33).
